# EUROPEAN PATENT SPECIFICATION

(11) **EP 1 584 539 B1**
(45) Date of publication and mention of the grant of the patent: **02.01.2008**
(21) Application number: 05005566.4
(22) Date of filing: 15.03.2005
(51) Int. Cl.: B62D 5/00, B62D 5/09, B62D 6/00, B62D 1/28

(54) **Hydrostatic steering systems**
Hydrostatisches Lenksystem
Système de direction hydro-statique

(30) Priority: 07.04.2004 GB 0407998
(43) Date of publication of application: 12.10.2005
(73) Proprietor: AGCO GmbH, 87616 Marktoberdorf (DE)
(72) Inventor: Freytag, Erich, 86987 Sachsenried (DE)
(74) Representative: Morrall, Roger

(56) References cited:
- EP-A- 1 508 498
- DE-U1- 20 304 336
- US-A- 3 651 885
- US-A1- 2003 178 243

## Description

The invention relates to a hydrostatic steering system for vehicles, including a steering angle setting device (e.g. a steering wheel) acting on a steering valve. The steering valve controls a steering drive by connecting a source of liquid under pressure with a steering cylinder in response to movement of the steering angle setting device. The steering system includes a sensor coordinated with the steering angle setting device to detect the set value of a steering angle. A sensor coordinated with the steering drive is provided to detect the actual value of steering angle achieved. A correcting control device compares the set value and the actual value of a steering angle and synchronizes the position of the steering angle setting device (steering wheel) and the position of the steering drive to correct any difference.

Steering gears of this kind are known from DE 10300686 A1. However, there is no detailed description of the way in which the control device effects a synchronizing of the steering drive if there is a difference between the position of the steering angle setting device and the position of the steering drive. Furthermore, this prior art is directed to a hydraulic correction means which reaches a synchronization of the steering angle only when the vehicle is driving in a straight ahead condition. This correction means cannot be used when driving at higher speeds or when driving through a curve. When driving curves, the steering performance will not give satisfaction.

According to the preamble of claim 1, US2003/178243 and EP-A-1508498 both disclose hydraulic steering systems in which the mechanical steering of vehicle wheels is assisted by a hydraulic cylinder. US-A-3651885 discloses an arrangement in which a steering valve is controlled by a first valve actuator from an associated steering wheel and by a second valve actuator controlled by an electric motor, the two valve actuators being interconnected via a torsionally eleastic and yielding connection such as a torsion bar.

It is the object of the invention to provide an improved form of hydrostatic steering system which allows correction of differences between the position of the steering angle setting device and the position of the steering drive at all times. Also the steering system is to useful to steer vehicles in different operational modes without the need of substantial adaptation.

According to the invention this is achieved by providing a hydrostatic steering system for vehicles including a first driver operated steering angle setting device, a steering valve operated by the steering angle setting device for controlling the supply of fluid from a pressurised source to a hydraulic steering cylinder which provides the sole means of steering an associated vehicle wheel via steering drive, a first sensor coordinated with the steering angle setting device to detect the set values of steering angle, a second sensor coordinated with the steering drive to detect the actual values of the steering angle, and a correcting control device making a comparison between the set and actual values of steering angle to synchronize the position of the steering angle setting device and the position of the steering drive, the system being characterised by the provision of a corrective planetary gear means connected between the steering angle setting device and the steering valve, the corrective gear means having a first input member connected with the steering angle setting device an output member connected with the steering valve, and a second input member also connected with the output member, the movement of the second input member being adj ustable by the control device in response to different vehicle operation modes to synchronise the set and actual values of steering angle.

The hydrostatic steering of the present invention is especially useful for commercial vehicles, such as tractors, which are driven in different operational modes and using higher speeds. Often, the operation if the steering motion is directed to the kind of use of the vehicle. The control device is equipped with a microcomputer which gives the possibility to steer the vehicle in the known manner in the "normal driving" operation mode using a steering wheel as the steering angle setting device. The control device gives signals for correction at all the times to the corrective gear. Consequently, the position of the steering angle setting device is synchronised with the position of a steering drive.

A further "reverse drive" operational mode is useful for vehicles which are used in both driving directions. For a change of the driving direction the seat for the driver together with the steering wheel is preferably turned as a unit in the vehicle cab into the desired direction of drive. This turning motion is not possible on all commercial vehicles having limited cab room. Consequently, it is only the seat of the driver which is turned without turning the steering wheel. In such a situation the steering system of the present invention enables, for example, a joystick positioned in the rear of the cab to act as a reverse driving steering angle setting device which is in connection with the control device. In this matter, the reverse driving facility can be provided relatively easily with system of the present invention.

The steering system of the present invention can also easily provide a further operational mode in which the vehicle is driven automatically along a given "lane line" defined by a GPS system. A GPS sensor is provided which receives position signals which are passed to the control device. The control device generates a series of steering angle signals to steer the vehicle parallel to a previously manually driven lane, the control device comparing these generated steering angle signals with the signals from the second sensor and adjusting the position of the second input member to synchronise these signals. The result is a better guiding of the vehicle along the lane line compared with known steering systems.

Advantageously, the corrective gear may be a planetary gear having a first input member in form of a first sun wheel and a second sun wheel which acts as an output member, both sun wheels meshing with respective planet gears which are connected by shafts, the shafts being supported in a planet carrier which acts as the second input member and which is rotatable by an electric motor.

The planetary carrier may be equipped on its outside with outer toothing which meshes with a worm wheel which is driven by the electric motor which is in turn controlled by signals from the control device.

When operating, in "reverse drive" mode the steering angle setting device is arranged to be locked so that the input into the corrective gear is via the second input member.

Similarly, when the vehicle is operating in "lane line guiding" mode the steering angle setting device is locked by a brake which means that the driver does not need to hold the steering wheel fixed by hand but he can override the automatic "lane line guiding" steering to make corrective actions if needed.

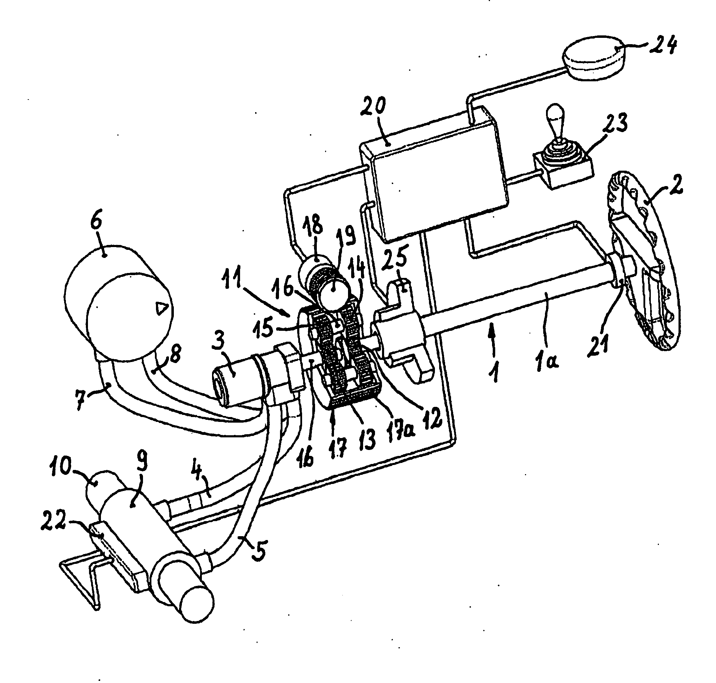

The invention is described in greater detail, by way of example only, with respect to the drawing which shows a perspective view of a hydrostatic steering system for a vehicle such as a tractor.

The steering system comprises a steering angle setting device 1 having two shafts 1a, 1b and a steering wheel 2 fixed to the end of shaft 1a. The other end of the steering angle setting device 1 is in driving connection with a steering valve 3. The steering valve 3 is connected by two conduits 7, 8 with the source 6 of fluid under pressure and by two further conduits 4 and 5 with a steering cylinder 9 of the steering system. The steering cylinder 9 is connected to the wheels of the vehicle by a rod assembly 10.

A corrective gear 11 is arranged between the two shafts 1a and 1b. The gear 11 is a planetary gear having an inner multiplication. The end of the shaft 1a is in fixed drive connection with a sun wheel 12 which is part of the gear 11. The end of shaft 1b, facing shaft 1a, is in fixed drive connection with a further sun wheel 13 of the gear 11. Sun wheels 12 and 13 have different diameters. It is not important which sun wheel of the sun wheels 12 and 13 has the larger diameter. In the shown example it is the sun wheel 12 which has a diameter about 20% larger than the diameter of the sun wheel 12. The sun wheel 12 which is fixed on shaft 1a is a first input member of the gear 11. The sun wheel 12 meshes with three planetary wheels 14 forming a set. Sun wheel 13 also meshes with three planetary wheels 15. Each planetary wheel 14 is connected with a planetary wheel 15 by a common shaft 16. Shafts 16 are supported in a planet carrier 17 which is the housing of the gear 11. Consequently, the two sets of planetary wheels rotate with each other.

An outer toothing 17a is provided on the outer circumference of planet carrier 17. A worm wheel 19, which is driven by an electric motor 18 meshes with this outer toothing 17a. The worm wheel 19 is designed and arranged to be self-blocking. The direction of rotation and the number of revolutions of the electric motor 18 is controlled by a control device 20 including a microprocessor. The electric motor 18 drives the worm wheel 19 resulting in a rotational motion of the planet carrier 17. This motion is substantially reduced due to the inner multiplication of the gear 11. The motion is transferred from the planetary wheels 14, 15 to the sun wheel 13. Consequently, shaft 1b is driven with an additional motion of rotation. The planet carrier 17 is the second input member. Sun wheel 13 is the output member of the corrective gear 11.

The control device 20 is connected with a sensor 21 which acts on shaft 1a to detect the value of the steering angle set by the steering wheel 2. A sensor 22 is arranged on the steering drive 9 to detect the actual value of the steering motion. Both signals are used within the control device 20 during a first "normal drive" operational mode. Control device 20 continuously makes a comparison between the set valve from sensor 21 and the actual value if the steering motion from sensor 22. In this way the position of the steering angle transmitter 1 is synchronised with the position of the rod assembly 10 by actuation of electric motor 18. The control device includes a digital memory in which the set values of the position of the steering angle setting device 1 and the actual values of the position of the steering drive are compared with each other.

The control device 20 has two further inputs. A second steering angle setting device 23 in the form of a joystick is provided to be used for the "reverse driving" operational mode. A further sensor 24 is provided to be used in a further "lane line guiding" operational mode.

When operating in the "reverse driving" mode, which may be initiated manually or automatically in response to the position of the driver's seat, the driver does not actuate the steering angle setting device 1 but only a steering angle setting device in the form of a joystick 23 which is located in the rear of the vehicle cab. Consequently, within the control device 20 signals are generated by comparison of set values from joystick 23 and actual values from sensor 22.

An output from control device 20 resulting from this comparison is fed to the electric motor 18. This motion is transferred by the worm wheel 19 to the planet carrier 17 and the planetary wheels 15 to the sun wheel 13. Consequently, the steering valve 3 is actuated accordingly in response to motion of the joystick 23.

A proper steering of the vehicle in this operational mode is only possible with the steering angle setting device 1 held fixed for the time this mode is operated. Consequently, any unwanted influence by the steering angle transmitter 1 is avoided. A braking device 25 may be arranged on the shaft 1a. The braking device 25 is actuated during this operational mode by the control device 20. Thus, the steering angle transmitter 1 is fixed and cannot be moved. The control device includes a further digital memory in which the comparison of the set values from the joystick 23 are compared with the actual values of the position of the steering drive from sensor 22.

When operating in the "lane line guiding" operational mode the driver initially steers the vehicle along a first straight lane in the normal manner. A GPS sensor 24 detects the starting and finishing points of this initial straight lane and, with the operator having entered into the GPS system the working width of the vehicle, the system can generate the path to be followed for subsequent straight lanes which are parallel to the first manually steered lane.

In this mode the GPS signals received via sensor 24 are fed into control device 20 where the steering angle values required for the guided lanes are generated by additional digital processing memory. These generated values are compared with the actual steering angle valves from sensor 22 as before and electric motor 18 is controlled to make the necessary corrections via planet carrier 17. The braking device 25 is again activated in this mode to make sure any influence by the steering angle setting device 1 is avoided and to guarantee the proper function of the gear 11. In this operational mode the braking moment of braking device 25 is limited to give the driver the possibility to move the steering wheel 2 if required with a high force to interfere with or adjust the steering motion.

The "lane line guiding" mode is initiated by operating an appropriate manual switch. For safety this mode should only be used at speeds lower than 20km/n as is usual when working in the field.

## Claims

1. A hydrostatic steering system for vehicles, including a first driver operated steering angle setting device (1), a steering valve (3) operated by the steering angle setting device for controlling the supply of fluid from a pressurised source (6) to a hydraulic steering cylinder (9) which provides the sole means of steering an associated vehicle wheel via a steering drive (10), a first sensor (21) coordinated with the steering angle setting device (1) to detect the set values of steering angle, a second sensor (22) coordinated with the steering drive (10) to detect the actual values of the steering angle, and a correcting control device (20) making a comparison between the set and actual values of steering angle to synchronize the position of the steering angle setting device and the position of the steering drive, the system being **characterised by** the provision of a corrective planetary gear means (11) connected between the steering angle setting device (1) and the steering valve (3), the corrective gear means having a first input member (12) connected with the steering angle setting device (1) an output member (13) connected with the steering valve (3), and a second input member (17) also connected with the output member (13), the movement of the second input member (17) being adjustable by the control device in response to different vehicle operation modes to synchronise the set and actual values of the steering angle.

2. A steering system according to claim 1 in which, with the vehicle operating in a "normal" mode, the second input member of the corrective gear means (11) is moved by the control device (20) to ensure that the position of the steering drive (10) matches the position set by the steering angle setting device (1).

3. A steering system according to claim 1 in which, with the vehicle operating in a "reverse drive" mode, the control drive (20) receives set values of steering angle from a reverse driving steering angle setting device (23) and ensures that the position of the steering drive (10) matches the position set by the reverse drive steering angle setting device (23).

4. A steering system according to claim 1 in which, with the vehicle operating in a "lane line guide" mode, the control device (20) receives position signals from a GPS sensor (24) and generates a series of steering angle signals to steer the vehicle parallel to a previously manually driven lane, the control device comparing these generated steering angle signals with the signals from the second sensor and adjusting the position of the second input member to synchronise these signals.

5. A steering system according to any on of the claims 1 to 4 wherein the corrective planetary gear (11) has an inner multiplication, a sun wheel (12) of the gear which is in drive connection with the steering angle setting device (1) acts as the first input member and a second sun wheel (13) acts as the output member, both of the sun wheels (12, 13) meshing with respective planet wheels (14, 15) which are connection by shafts (16), the shafts being rotationally supported in a planet carrier (17), the planet carrier being arranged to be rotated by a motor and acting as the second input member of the gear (11) for synchronising the set and actual values of steering angle.

6. A steering system according to claim 5 in which, the planetary carrier (17) includes and outer toothing (17a) meshing with a worm wheel (19), the worm wheel being driven by an electric motor controlled by the control device (20).

7. A steering system according to claim 3 in which the steering angle setting device (1) is arranged to be locked during operation in "reverse drive" mode.

8. A steering system according to claim 4 in which, the steering angle setting device (1) is arranged to be locked during operation in "lane line following" mode by a braking device (25) which allows movement of the steering angle setting device if necessary to make corrective action.

## Patentansprüche

1. Ein hydrostatisches Lenksystem für Fahrzeuge mit einer ersten, durch einen Fahrer betätigbaren Stelleinrichtung (1) für den Lenkwinkel, mit einem Lenkventil (3), das über die Stelleinrichtung zur Steuerung des Druckmittels aus einer Druckquelle (6) in einen hydraulischen Lenkzylinder (9) betätigt wird, der das einzige Mittel zum Lenken eines zugeordneten Fahrzeugrades über einen Lenkantrieb (10) darstellt, mit einem ersten Sensor (21), der der Stelleinrichtung (1) für den Lenkwinkel zum Erfassen der eingestellten Werte des Lenkwinkels zugeordnet ist, mit einem zweiten Sensor (22), der dem Lenkantrieb (10) zum Erfassen der tatsächlichen Werte des Lenkwinkels zugeordnet ist, und mit einer korrigierenden Steuereinrichtung (20), die die eingestellten Werte mit den tatsächlichen Werten des Lenkwinkels zur Synchronisation der Stellung der Stelleinrichtung für den Lenkwinkel mit der Stellung des Lenkantriebs vergleicht, **dadurch gekennzeichnet, dass** ein Planeten-Stellgetriebe (11) vorgesehen und zwischen der Stelleinrichtung (1) für den Lenkwinkel und dem Lenkventil (3) eingeschaltet ist, wobei das Planeten-Stellgetriebe ein erstes, mit der Stelleinrichtung (1) für den Lenkwinkel verbundenes Eingangselement (12), ein mit dem Lenkventil (3) verbundenes Ausgangselement (13) und ein zweites, auch mit dem Ausgangselement (13) verbundenes Eingangselement (17) aufweist, wobei die Bewegung des zweiten Eingangselements (17) über die Steuereinrichtung abhängig von verschiedenen Betriebsweisen des Fahrzeugs zur Synchronisation der eingestellten mit den tatsächlichen Werten des Lenkwinkels einstellbar ist.

2. Ein Lenksystem nach Anspruch 1, **dadurch gekennzeichnet, dass** das zweite Eingangselement des Stellgetriebes (11) bei "normaler" Betriebsweise des Fahrzeugs über die Steuereinrichtung (20) bewegt wird, um sicherzustellen, dass die Stellung des Lenkantriebs (10) der über die Stelleinrichtung (1) für den Lenkwinkel eingestellten Stellung entspricht.

3. Ein Lenksystem nach Anspruch 1, **dadurch gekennzeichnet, dass** die Steuereinrichtung (20) bei Betriebsweise des Fahrzeugs in "Rückwärtsfahrt" eingestellte Werte des Lenkwinkels von einer Stelleinrichtung (23) für den Lenkwinkel bei Rückwärtsfahrt empfängt, um sicherzustellen, dass die Stellung des Lenkantriebs (10) der über die Stelleinrichtung (23) für den Lenkwinkel eingestellten Stellung entspricht.

4. Ein Lenksystem nach Anspruch 1, **dadurch gekennzeichnet, dass** die Steuereinrichtung (20) bei Betriebsweise des Fahrzeugs in "Fahrspurführung" Positionssignale eines GPS-Sensors (24) empfängt und eine Folge von Lenkwinkelsignalen erzeugt, um das Fahrzeug parallel zu einer zuvor manuell gefahrenen Fahrspur zu lenken, wobei die Steuereinrichtung die erzeugten Lenkwinkelsignale mit den Signalen des zweiten Sensors vergleicht und die Stellung des zweiten Eingangselements zur Synchronisation dieser Signale einstellt.

5. Ein Lenksystem nach einem der Ansprüche 1 bis 4, **dadurch gekennzeichnet, dass** das Planeten-Stellgetriebe (11) eine innere Übersetzung aufweist, dass ein Sonnenrad (12) des Getriebes, das mit der Stelleinrichtung (1) für den Lenkwinkel in Drehverbindung steht, als erstes Eingangselement arbeitet, und dass ein zweites Sonnenrad (13) als Ausgangselement arbeitet, wobei beide Sonnenräder (12, 13) mit entsprechenden Planetenrädern (14, 15) kämmen, die über Wellen (16) verbunden sind, die drehbar in einem Planetenträger (17) aufgenommen sind, der über einen Motor drehbar angeordnet ist und als zweites Eingangselement des Stellgetriebes (11) zur Synchronisation der eingestellten mit den tatsächlichen Werten des Lenkwinkels arbeitet.

6. Ein Lenksystem nach Anspruch 5, **dadurch gekennzeichnet, dass** der Planetenträger (17) eine Außenverzahnung (17a) aufweist, die mit einem Schneckenrad (19) kämmt, und dass das Schneckenrad gesteuert durch die Steuereinrichtung (20) über einen Elektromotor angetrieben wird.

7. Ein Lenksystem nach Anspruch 3, **dadurch gekennzeichnet, dass** die Stelleinrichtung (1) für den Lenkwinkel bei Betriebsweise des Fahrzeugs in "Rückwärtsfahrt" blockiert wird.

8. Ein Lenksystem nach Anspruch 4, **dadurch gekennzeichnet, dass** die Stelleinrichtung (1) für den Lenkwinkel bei Betriebsweise des Fahrzeugs in "Fahrspurführung" durch eine Bremseinrichtung (25) blockiert wird, die eine Bewegung der Stelleinrichtung für den Lenkwinkel bei notwendigen Korrekturen zulässt.

## Revendications

1. Système de braquage hydrostatique pour des véhicules incluant un premier dispositif d'établissement d'angle de braquage (1) actionné par le conducteur, une soupape de braquage (3) actionnée par le dispositif d'établissement d'angle de braquage pour commander l'alimentation de fluide à partir d'une source mise sous pression (6) vers un cylindre de braquage hydraulique (9) qui fournit les seuls moyens de braquage d'une roue de véhicule associée via un entraînement de braquage (10), un premier capteur (21) coordonné avec le dispositif d'établissement d'angle de braquage (1) pour détecter les valeurs établies de l'angle de braquage, un second capteur (22) coordonné avec l'entraînement de braquage (10) pour détecter les valeurs réelles de l'angle de braquage, et un dispositif de commande de correction (20) réalisant une comparaison entre les valeurs établie et réelle de l'angle de braquage pour synchroniser la position du dispositif d'établissement d'angle de braquage et la position de l'entraînement de braquage, le système étant **caractérisé par** la fourniture de moyens formant engrenage planétaire de correction (11) reliés entre le dispositif d'établissement d'angle de braquage (1) et la soupape de braquage (3), les moyens formant engrenage de correction ayant un premier élément d'entrée (12) relié au dispositif d'établissement d'angle de braquage (1), un élément de sortie (13) relié à la soupape de braquage (3), et un second élément d'entrée (17) relié également à l'élément de sortie (13), le mouvement du second élément d'entrée (17) étant ajustable par l'intermédiaire du dispositif de commande en réponse à différents modes de fonctionnement du véhicule pour synchroniser les valeurs établie et réelle de l'angle de braquage.

2. Système de braquage selon la revendication 1, dans lequel, le véhicule fonctionnant dans un mode "normal", le second élément d'entrée des moyens formant engrenage de correction (11) est déplacé par le dispositif de commande (20) pour garantir que la position de l'entraînement de braquage (10) s'apparie avec la position établie par le dispositif d'établissement d'angle de braquage (1).

3. Système de braquage selon la revendication 1, dans lequel, le véhicule fonctionnant dans un mode "d'entraînement inverse", l'entraînement de commande (20) reçoit des valeurs établies d'angle de braquage à partir d'un dispositif d'établissement d'angle de braquage d'entraînement inverse (3), et garantit que la position de l'entraînement de braquage (10) s'apparie avec la position établie par le dispositif d'établissement d'angle de braquage d'entraînement inverse (23).

4. Système de braquage selon la revendication 1, dans lequel, le véhicule fonctionnant dans un mode de "guidage de ligne médiane", le dispositif de commande (20) reçoit des signaux de position à partir d'un capteur GPS (24), et génère une série de signaux d'angle de braquage pour braquer le véhicule parallèlement à une ligne tracée précédemment manuellement, le dispositif de commande comparant ces signaux d'angle de braquage générés avec les signaux provenant du second capteur, et ajustant la position du second élément d'entrée pour synchroniser ces signaux.

5. Système de braquage selon l'une quelconque des revendications 1 à 4, dans lequel l'engrenage planétaire de correction (11) a une multiplication intérieure, un planétaire (12) de l'engrenage qui est en connexion d'entraînement avec le dispositif d'établissement d'angle de braquage (1) agit comme premier élément d'entrée, et un second planétaire (13) agit comme élément de sortie, les deux planétaires (12, 13) engrenant avec des roues satellites respectives (14, 15) qui sont connectées par des arbres (16), les arbres étant supportés de manière rotative dans un porte-satellites (17), le porte-satellites étant agencé pour être tourné par un moteur et agissant comme second élément d'entrée de l'engrenage (11) pour synchronisation des valeurs établie et réelle de l'angle de braquage.

6. Système de braquage selon la revendication 5, dans lequel le porte-satellites (17) comporte une denture extérieure (17A) engrenant avec une roue à vis (19), la roue à vis étant entraînée par un moteur électrique commandé par le dispositif de commande (20).

7. Système de braquage selon la revendication 3, dans lequel le dispositif d'établissement d'angle de braquage (1) est agencé pour être verrouillé en fonctionnement dans le mode "d'entraînement inverse".

8. Système de braquage selon la revendication 4, dans lequel le dispositif d'établissement d'angle de braquage (1) est agencé pour être verrouillé en fonctionnement dans le mode de "suivi de ligne médiane", par un dispositif de freinage (25) qui permet un déplacement du dispositif d'établissement d'angle de braquage si nécessaire pour effectuer une action de correction.
